# EUROPÄISCHE PATENTSCHRIFT

(11) **EP 1 961 184 B1**
(45) Veröffentlichungstag und Bekanntmachung des Hinweises auf die Patenterteilung: **24.02.2016**
(21) Anmeldenummer: 06830420.3
(22) Anmeldetag: 06.12.2006
(51) Int. Cl.: H04L 29/06, H04W 12/06

(54) **VERFAHREN ZUM VERWALTEN EINES ZÄHLERSTANDES, DER EINEM PAAR BESTEHEND AUS EINEM KOMMUNIKATIONSENDGERÄT UND EINER BASISSTATION ZUGEORDNET IST**
METHOD FOR MANAGING A COUNTER STATUS ALLOCATED TO A PAIR COMPRISING A COMMUNICATION TERMINAL AND A BASE STATION
PROCEDE DE GESTION D'UNE INDICATION D'UN COMPTEUR QUI EST ASSOCIEE AU COUPLE TERMINAL DE COMMUNICATION ET STATION DE BASE

(30) Priorität: 14.12.2005 DE 102005059827
(43) Veröffentlichungstag der Anmeldung: 27.08.2008
(73) Patentinhaber: Siemens Aktiengesellschaft, 80333 München (DE)
(72) Erfinder: FALK, Rainer, 85386 Eching (DE); GÜNTHER, Christian, 85579 Neubiberg (DE); KRÖSELBERG, Dirk, 80469 München (DE)
(86) Internationale Anmeldenummer: PCT/EP2006/069379
(87) Internationale Veröffentlichungsnummer: WO 2007/068638

(56) Entgegenhaltungen:
- US-A1- 2005 271 209
- US-B1- 6 966 003
- IEEE 802 11 WORKING GROUP: "802.11i Part 11: Wireless LAN Medium Access Control (MAC) and Physical Layer (PHY) specifications, Amendment 6: Medium Access Control (MAC) Security Enhancements" IEEE STD 802.11I-2004, XX, XX, 23. Juli 2004 (2004-07-23), Seite complete, XP002368930
- "IEEE 802.16e -2005, IEEE 802.16-2004/Cor 1-2005: PART 16: AIR INTERFACE FOR FIXED AND MOBILE BROADBAND WIRELESS ACCESS SYSTEMS, Amendmend 2: Physical and Medium Access Control Layers for Combined Fixed and Mobile Operation in Licensed Bands, Chapter 7: Security Sublayer" IEEE WORKING DOCUMENT, IEEE,, US, [Online] Bd. 802.16 e, 8. November 2005 (2005-11-08), - 7. Dezember 2005 (2005-12-07) Seiten 269-316, XP002425231 Gefunden im Internet: URL:http://standards.ieee.org/reading/ieee /std/lanman/restricted/802.16e-2005.pdf> [gefunden am 2007-03-16]

## Beschreibung

Die Erfindung betrifft ein Verfahren zum Verwalten eines Zählerstandes.

Um die Kompatibilität und Interoperabilität von breitbandigen drahtungebundenen Kommunikationsnetzen voranzutreiben, haben sich mehrere Interessenten in dem so genannten WiMax Forum (www.wiMaxforum.org) zusammengeschlossen. Ein Ziel dieses Forums ist, einen Standard zu erstellen, der es ermöglicht, dass mobile Kommunikationsendgeräte auf unterschiedliche Kommunikationsnetze zugreifen können.

Hierbei ist vorgesehen, dass bei einer Netzwerkanmeldung eines Kommunikationsteilnehmers, beispielsweise nach dem Extensible Authentication Protocol, ein Pairwise Master Key eingerichtet wird. Aus diesem Pairwise Master Key wird ein für jedes Paar von Kommunikationsendgerät und Basisstation unterschiedlicher Authentication Key abgeleitet. Dieser Authentication Key wird beispielsweise für Management Nachrichten verwendet. Bei jedem Kommunikationsvorgang, also entweder beim Senden einer Nachricht vom Kommunikationsendgerät zur Basisstation oder beim Empfangen einer Nachricht durch das Kommunikationsendgerät von der Basisstation (Uplink/ Downlink), wird ein diesem Authentication Key zugeordneter Zählerstand erhöht. Daher ist dieser Zählerstand eindeutig für ein bestimmtes Paar von Kommunikationsendgerät und Basisstation, und kann somit herangezogen werden, um die Authentizität des Kommunikationsendgerätes sicher zu stellen. Dies dient beispielsweise zur Sicherung von Replay-Angriffen, bei denen ein unberechtigter Benutzer abgefangene Nachrichten in das Kommunikationsnetz wieder einspielen könnte.

Um diesen Zählerstand zu verwalten, speichert die Basisstation für jeden Authentication Key den zugehörigen Zählerstand ab. Da der Speicherplatz zum Speichern dieser Zählerstände auf einer Basisstation jedoch begrenzt ist, kann es erforderlich sein, einen Zählerstand zu löschen. Zudem kann der Zählerstand auch auf andere Weise, wie beispielsweise einen Datenverlust verloren gehen. In diesem Fall ist ein Handover, also ein Weiterreichen einer Kommunikationsverbindung von einer Basisstation an eine andere Basisstation, unter Verwendung des aktuellen Pairwise Master Key nicht mehr möglich, da sonst Replay Attacken nicht ausgeschlossen werden könnten. Daher müsste eine erneute Authentifikation mittels des Extensible Authentication Protocols vorgenommen werden um einen neuen Pairwise Master Key einzurichten und anschließend aus diesem wieder neue Authentication Keys ableiten zu können. Dies führt zu Verzögerungen und erhöhter Signalisierung, da eine solche erneute Authentifikation nicht lokal, sondern unter Einbeziehung des AAA-Servers (Authentication, Authorization, Accounting) im Heimatnetz des Kommunikationsendgerätes erfolgt.

US 6 966 003 B1 offenbart ein Netzwerksystem zum Umlegen von Security Associations. Eine gesicherte Kommunikation kann zwischen zwei Netzwerkelementen umgeschaltet werden, wobei die gleiche Security Association und bei einer Verbindung eine vordefinierte Sequence Number - Grenze unterhalb der maximalen Sequence Number genutzt werden. Bevor eine Umschaltung auf ein anderes Netzwerkelement erfolgt, wird in diesem die Security Association implementiert und eine Start Sequence Number angewandt, die größer als die vordefinierte Sequence Number - Grenze ist.

Der vorliegenden Erfindung liegt somit die Aufgabe zugrunde, eine verbesserte Verwaltung von Zählerständen in einem Kommunikationsnetz anzugeben, durch das eine effizientere Verwaltung des begrenzten Speicherplatzes auf einer Basisstation ermöglicht wird.

Erfindungsgemäß wird diese Aufgabe durch ein Verfahren mit den Merkmalen des Anspruchs 1 gelöst. Vorteilhafte Weiterbildungen der vorliegenden Erfindung sind in den abhängigen Ansprüchen beschrieben.

Entsprechend der vorliegenden Erfindung ist in einem Verfahren zum Verwalten eines Zählerstandes in einem Kommunikationsnetz der Zählerstand einem ersten Kommunikationsteilnehmer und einem ersten Kommunikationsnetzelement zugeordnet. Der Zählerstand wird bei einem Kommunikationsvorgang zwischen dem ersten Kommunikationsteilnehmer und dem ersten Kommunikationselement erhöht. Bei Eintreten eines vorgebbaren Kriteriums ist der Zählerstand in einem zweiten Kommunikationsnetzelement abspeicherbar. Der Zählerstand wird hierbei zum ersten Kommunikationsteilnehmer und zum ersten Kommunikationsnetzelement zuordenbar in dem zweiten Kommunikationsnetzelement abgespeichert. Dies hat die vorteilhafte Wirkung, dass durch die Auslagerung des Zählerstandes von dem ersten Kommunikationsnetzelement zum zweiten Kommunikationsnetzelement auch nach einem Löschen des Zählerstandes auf dem ersten Kommunikationsnetzelement keine erneute Authentifikation über den AAA-Server notwendig ist. So kann der ausgelagerte Zählerstand, wenn er bei einem Handover benötigt wird, wieder von dem zweiten Kommunikationsnetzelement zu dem ersten Kommunikationsnetzelement übertragen werden.

Das vorgebbare Kriterium kann beispielsweise eine vorgebbare Anzahl von Kommunikationsvorgängen sein oder ein noch vorhandener minimaler Speicherplatz in dem ersten Kommunikationsnetzelement. Letzteres hat den Vorteil, dass kurz vor dem Löschen oder Überschreiben eines Zählerstandes der Zählerstand noch auf dem zweiten Kommunikationsnetzelement gesichert wird.

Vorzugsweise werden neben dem Zählerstand weitere Authentifikationsinformationen des ersten Kommunikationsteilnehmers auf dem zweiten Kommunikationsnetzelement abgespeichert. So kann beispielsweise in vorteilhafter Weise ein Authentication Key Kontext mit abgespeichert werden, der eine spätere Wiederherstellung des Authentification Key erleichtert.

In einer weiteren vorteilhaften Ausgestaltung der vorliegenden Erfindung speichert das zweite Kommunikationsnetzelement einzelne Kommunikationsvorgänge zwischen dem ersten Kommunikationsteilnehmer und ersten Kommunikationsnetzelementen ab. Das zweite Kommunikationsnetzelement überwacht anhand der abgespeicherten Kommunikationsvorgänge des ersten Kommunikationsteilnehmers ein vorgebbares Kriterium. Bei Eintreten des vorgebbaren Kriteriums löscht das zweite Kommunikationsnetzelement die dem ersten Kommunikationsteilnehmer zugeordneten Zählerstände in zumindest einem ersten Kommunikationsnetzelement oder lässt diese löschen. Alternativ veranlasst das zweite Kommunikationsnetzelement eine Mitteilung über die Zählerstände an zumindest ein erstes Kommunikationsnetzelement. Somit kann in vorteilhafter Weise der Speicherplatz auf den ersten Kommunikationsnetzelementen optimiert werden, da von dem zweiten Kommunikationsnetzelement anhand des vorgebbaren Kriteriums entschieden wird, wann beispielsweise ein Löschen des Zählerstandes auf einem ersten Kommunikationsnetzelement sinnvoll ist.

Das vorgebbare Kriterium ist beispielsweise ein absehbares oder eingetretenes Ende einer Gültigkeitsdauer der Authentifikationsinformation des ersten Kommunikationsteilnehmers. So wird in vorteilhafter Weise, wenn eine Re-Authentication einer Kommunikationsteilnehmer-Kommunikationsnetzbeziehung bevorsteht und somit ein neuer Zählerstand ermittelt wird, der alte Zählerstand auf dem ersten Kommunikationsnetzelement gelöscht.

Weiterhin ist das vorgebbare Kriterium als eine neue Authentifikationsinformation des ersten Kommunikationsteilnehmers ausgestaltbar, das heißt dass die alte Authentifikationsinformation und damit der alte Zählerstand auf den ersten Kommunikationsnetzelementen gelöscht werden können.

Des Weiteren ist das vorgebbare Kriterium derart ausgestaltbar, dass es anhand eines Bewegungsprofils des ersten Kommunikationsteilnehmers überwacht wird. Dies hat beispielsweise die vorteilhafte Wirkung, dass, wenn eine Tendenz einer Bewegungsrichtung eines ersten Kommunikationsteilnehmers außer Reichweite eines ersten Kommunikationsnetzelementes führt, der Zählerstand auf diesem ersten Kommunikationsnetzelement gelöscht werden kann, da ein weiterer Bedarf für diesen Zählerstand mit großer Wahrscheinlichkeit ausgeschlossen werden kann.

Auch kann das vorgebbare Kriterium anhand einer Priorisierung von ersten Kommunikationsteilnehmern überwacht werden. Dies bedeutet, dass in vorteilhafter Weise beispielsweise anhand der verwendeten Protokolle beziehungsweise Dienste entschieden wird, wessen Zählerstand auf dem ersten Kommunikationsnetzelement gelöscht wird. So werden insbesondere zeitkritische Dienste (Sprachübertragung) priorisiert, da hierbei eine Unterbrechung vom Benutzer als störender empfunden würde. Bei zeitunkritischen Diensten hingegen (Web Surfen, Dateidownload), wird dies als weit weniger störend empfunden, da dort nur eine kurze Unterbrechung auftritt, die lediglich zu einer etwas längeren Dauer bei der Datenübertragung führt.

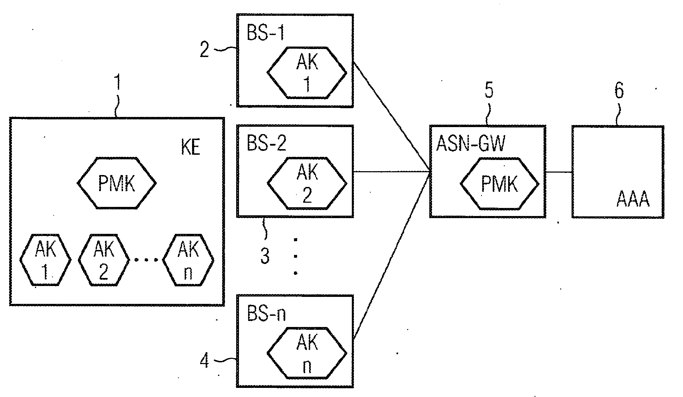

Die vorliegende Erfindung wird nachfolgend an einem Ausführungsbeispiel anhand der Zeichnung näher erläutert. Es zeigt die
- Figur 1: eine schematische Darstellung eines Kommunikationsnetzes mit einer Zuordnung der Speicherplätze von Pairwise Master Key und Authentication Keys.

Die Figur 1 zeigt einen schematischen Aufbau eines mit einem Kommunikationsnetz verbundenen Kommunikationsendgerätes 1. Bei der Netzwerkanmeldung des Kommunikationsendgerätes 1 wird im Rahmen einer Extensible Authentication Protocol basierten Authentifikation unter Einbeziehung des AAA-Servers 6 im Heimatnetz des Kommunikationsendgerätes 1 ein Pairwise Master Key eingerichtet. Dieser Primary Master Key wird im ASN-GW (Access Service Network Gateway) 5 des besuchten Kommunikationsnetzes hinterlegt. Auf Grundlage des Pairwise Master Keys wird für jedes Kommunikationsendgerät 1 und Basisstation 2, 3, 4 Paar ein Authentication Key AK1, AK2, AKn abgeleitet. Um unter anderem den zu einem Authentication Key zugehörigen Zähler zu verwalten, legt die Basisstation 2, 3, 4 einen Authentication Key Kontext für jeden Authentication Key AK1, AK2, AKn an. Die vorliegende Erfindung sieht nun vor, dass der AK-Kontext auf dem ASN-GW ausgelagert wird. Insbesondere gilt dies für die Zähler PN-U/D, da diese nicht auf der Basis des Pairwise Master Key vom ASN-GW selbst wieder abgeleitet werden können. Die Auslagerung des AK-Kontext von der Basisstation auf den ASN-GW kann beispielsweise nach einer vorgebbaren Anzahl von Kommunikationsvorgängen vorgenommen werden oder dann, wenn der Basisstation lokale Speicherplatz zum Ablegen von AK-Kontexten voll ist. Hierzu wird im ASN-GW ein entsprechender Speicherplatz vorgesehen. In diesem Ausführungsbeispiel entspricht also der erste Kommunikationsteilnehmer dem Kömmunikationsendgerät, das erste Kommunikationsnetzelement der Basisstation, das zweite Kommunikationsnetzelement der ASN-GW und der Zählerstand den Zählern PN-U und PN-D.

Vorzugsweise ordnet das ASN-GW einem gespeicherten AK-Kontext den Pairwise Master Key zu, aus dem der jeweilige AK-Kontext abgeleitet wurde. Wenn der Pairwise Master Key gelöscht wird, beispielsweise wegen Re-Authentication, werden die daraus abgeleiteten AK-Kontexte ebenfalls gelöscht.

Nach einem weiteren Ausführungsbeispiel verfolgt das ASN-GW die Historie eines Kommunikationsteilnehmers anhand der abgespeicherten Kommunikationsvorgänge des Kommunikationsteilnehmers. Dies erfolgt beispielsweise dadurch, dass sich das ASN-GW merkt, welche Basisstationen von dem Kommunikationsteilnehmer aufgesucht wurden. Wenn die Gültigkeit des Pairwise Master Keys beendet wird beziehungsweise eine Re-Authentication erfolgt, löscht das ASN-GW die gespeicherten AK-Kontexte auf den besuchten Basisstationen direkt oder sendet eine Mitteilung, in den der jeweilige Speicher als freigebbar gekennzeichnet wird. Dies hat den Vorteil, dass der Speicher auf den Basisstationen unter Umständen früher freigegeben wird, als es die maximale Lebenszeit des Pairwise Master Keys und damit des AK-Kontextes zulassen würde.

Nach einer weiteren Ausführungsvariante weiß das ASN-GW, wie viele AK-Kontexte eine Basisstation maximal speichern kann und wie viele AK-Kontexte aktuell gespeichert sind. Wenn der Speicherplatz nun knapp wird, kann mit der Historie des Kommunikationsteilnehmers und den aktuell verfügbaren Informationen zu dem Teilnehmer das ASN-GW eine bessere Entscheidung treffen, um beispielsweise einen Kommunikationsteilnehmer zu finden, dessen AK-Kontext gelöscht werden kann, der mit höherer Wahrscheinlichkeit als andere Teilnehmer nicht mehr zu dieser Basisstation zurückkommen wird. Alternativ kann auch eine Basisstation, deren Speicherplatz zur Ablage von AK-Kontexten zu Ende geht, dies aktiv dem ASN-GW mitteilen, worauf das ASN-GW dann AK-Kontexte auf dieser Basisstation löscht beziehungsweise das Löschen veranlasst. In dieser Variante muss das ASN-GW nicht mit verfolgen, wie viele freie Speicherplätze zum Ablegen von AK-Kontexten noch auf einer Basisstation verfügbar sind.

Ein geeignetes Kriterium für die Auswahl eines Kommunikationsteilnehmers, dessen AK-Kontexte gelöscht werden können, ist beispielsweise die gerichtete Bewegung des Kommunikationsteilnehmers in eine Richtung weg von der Basisstation. Weiterhin kann die aktuelle Bewegungsgeschwindigkeit, der Bewegungsraum, die Anzahl der besuchten Basisstationen, oder die Restgültigkeitsdäuer des Pairwise Master Keys des Kommunikationsteilnehmers in eine Bewertung mit eingehen.

Ein weiteres Kriterium wäre, dass AK-Kontexte für diesen Kommunikationsteilnehmer auf anderen räumlich nahen Basisstationen bereits gelöscht wurden, so dass eine Re-Authentication sowieso notwendig wird. Dies hat den Vorteil, dass bei einem nicht ausreichenden Speicherplatz nicht alle Kommunikationsteilnehmer gleich schlecht behandelt werden müssen, sondern durch eine geeignete Auswahl zumindest einige AK-Kontexte erhalten bleiben, die dann zudem auf allen einem ASN-GW zugeordneten Basisstationen verfügbar sind.

Ein weiterer Vorteil der vorliegenden Erfindung ist, dass die vorgeschlagene Lösung auf den bisherigen Kommunikationsnetzprotokollen aufsetzbar ist, ohne größere Modifikationen der einzelnen Komponenten des Kommunikationsnetzes vornehmen zu müssen.

Die vorliegende Erfindung ist nicht auf die hier beschriebenen Ausführungsbeispiele beschränkt.

## Patentansprüche

1. Verfahren zum Verwalten eines Zählerstandes in einem Kommunikationsnetz, wobei
- der Zählerstand von einer Authentifikationsinformation umfasst wird und einem ersten Kommunikationsteilnehmer und einem ersten Kommunikationsnetzelement zugeordnet ist,
- der Zählerstand bei einem Kommunikationsvorgang zwischen dem ersten Kommunikationsteilnehmer und dem ersten Kommunikationsnetzelement erhöht wird,
- der Zählerstand bei Eintreten eines vorgebbaren ersten Kriteriums in einem zweiten Kommunikationsnetzelement abspeicherbar ist,
- der Zählerstand zum ersten Kommunikationsteilnehmer und zum ersten Kommunikationsnetzelement zuordenbar in dem zweiten Kommunikationsnetzelement abgespeichert wird,
- das zweite Kommunikationsnetzelement einzelne Kommunikationsvorgänge zwischen dem ersten Kommunikationsteilnehmer und ersten Kommunikationsnetzelementen abspeichert,
- das zweite Kommunikationsnetzelement anhand der abgespeicherten Kommunikationsvorgänge des ersten Kommunikationsteilnehmers ein vorgebbares zweites Kriterium überwacht,
- und bei Eintreten des vorgebbaren zweiten Kriteriums die dem ersten Kommunikationsteilnehmer zugeordneten Zählerstände in zumindest einem ersten Kommunikationsnetzelement löscht und/oder löschen lässt oder eine Mitteilung darüber an zumindest ein erstes Kommunikationsnetzelement veranlasst.

2. Verfahren nach Anspruch 1, wobei
das Kommunikationsnetz ein so genanntes WiMax, World Wide Interoperability for Microwave Access, Funknetzwerk ist.

3. Verfahren nach mindestens einem der vorhergehenden Ansprüche, wobei
das vorgebbare erste Kriterium eine vorgebbare Anzahl von Kommunikationsvorgängen ist.

4. Verfahren nach mindesten einem der vorhergehenden Ansprüche, wobei
das vorgebbare erste Kriterium ein noch vorhandener minimaler Speicherplatz in dem ersten Kommunikationsnetzelement ist.

5. Verfahren nach mindestens einem der vorhergehenden Ansprüche, wobei
neben dem Zählerstand weitere Authentifikationsinformationen des ersten Kommunikationsteilnehmers in dem zweiten Kommunikationsnetzelement abgespeichert werden.

6. Verfahren nach Anspruch 1, wobei
das vorgebbare zweite Kriterium ein absehbares oder eingetretenes Ende einer Gültigkeitsdauer der Authentifikationsinformation des ersten Kommunikationsteilnehmers ist.

7. Verfahren nach Anspruch 1, wobei
das vorgebbare zweite Kriterium eine neue Authentifikationsinformation des ersten Kommunikationsteilnehmers ist.

8. Verfahren nach Anspruch 1, wobei
das vorgebbare zweite Kriterium anhand eines Bewegungsprofils des ersten Kommunikationsteilnehmers überwacht wird.

9. Verfahren nach Anspruch 1, wobei
das vorgebbare zweite Kriterium anhand einer Priorisierung von ersten Kommunikationsteilnehmern überwacht wird.

10. Verfahren nach mindestens einem der vorhergehenden Ansprüche, wobei
der erste Kommunikationsteilnehmer eine MSS (Mobile Subscriber Station), das erste Kommunikationsnetzelement eine BS (Base Station) und das zweite Kommunikationsnetzelement ein ASN-GW (Access Service Network Gateway) nach dem WiMax-Standard ist.

## Claims

1. Method for managing a counter status in a communication network, with
- the counter status being included in authentication information and being allocated to a first communication subscriber and a first communication network element,
- the counter status being increased with a communication process between the first communication subscriber and the first communication network element,
- the counter status being storable in a second communication network element when a predeterminable first criterion is met,
- the counter status being stored in the second communication network element such that it can be allocated to the first communication subscriber and to the first communication network element,
- the second communication network element storing individual communication processes between the first communication subscriber and the first communication network elements,
- the second communication network element monitoring a predeterminable second criterion on the basis of the stored communication processes of the first communication subscriber,
- and when the predeterminable second criterion is met, the counter statuses allocated to the first communication subscriber deleting in at least one first communication network element and/or being able to be deleted or a notification thereof prompting at least one first communication network.

2. Method according to claim 1, with the communication network being a so-called WiMax, World Wide Interoperability for Microwave Access, radio network.

3. Method according to at least one of the preceding claims, with the predeterminable first criterion being a predeterminable number of communication processes.

4. Method according to at least one of the preceding claims, with the predeterminable criterion being a minimum storage space which is still available in the first communication network element.

5. Method according to at least one of the preceding claims, with, in addition to the counter status, further authentication information of the first communication subscriber being stored in the second communication network.

6. Method according to claim 1, with the predeterminable second criterion being a foreseeable or incurred end to a period of validity of the authentication information of the first communication subscriber.

7. Method according to claim 1, with the predeterminable second criterion being new authentication information of the first communication subscriber.

8. Method according to claim 1, with the predeterminable second criterion being monitored on the basis of a movement profile of the first communication subscriber.

9. Method according to claim 1, with the predeterminable second criterion being monitored on the basis of a prioritisation of first communication subscribers.

10. Method according to at least one of the preceding claims, with the first communication subscriber being an MSS (Mobile Subscriber Station), the first communication network element being a BS (Base Station) and the second communication network element being an ASN-GW (Access Service Network Gateway) according to the WiMax standard.

## Revendications

1. Procédé de gestion d'un état de compteur dans un réseau de communication, dans lequel
- on détecte l'état de compteur d'une information d'authentification et il est associé à un premier abonné et à un premier élément de réseau de communication,
- on augmente l'état de compteur lors d'une opération de communication entre le premier abonné et le premier élément de réseau de communication,
- l'état de compteur lors de la réalisation d'un premier critère prédéfinissable peut être mémorisé dans un deuxième élément de réseau de communication,
- l'état de compteur est mémorisé dans le deuxième élément de réseau de communication d'une façon associable au premier abonné et au premier élément de réseau de communication,
- le deuxième élément de réseau de communication mémorise des opérations de communication individuelles entre le premier abonné et des premiers éléments de réseau de communication,
- le deuxième élément de réseau de communication surveille à l'aide des opérations de communication mémorisées du premier abonné un deuxième critère prédéfinissable,
- et lors de la réalisation du deuxième critère prédéfinissable, il efface ou il fait effacer les états de compteur associés au premier abonné dans au moins un premier élément de réseau de communication ou il déclenche une communication à ce sujet à au moins un premier élément de réseau de communication.

2. Procédé selon la revendication 1, dans lequel le réseau de communication est un réseau dit WiMax, World Wide Interoperability for Microwave Access, un réseau radio.

3. Procédé selon au moins l'une des revendications précédentes, dans lequel le premier critère prédéfinissable est un nombre prédéfinissable d'opérations de communication.

4. Procédé selon au moins l'une des revendications précédentes, dans lequel le premier critère prédéfinissable est un espace de mémoire minimal encore présent dans le premier élément de réseau de communication.

5. Procédé selon au moins l'une des revendications précédentes, dans lequel, en plus de l'état de compteur, d'autres informations d'authentification sont mémorisées dans le deuxième élément de réseau de communication.

6. Procédé selon la revendication 1, dans lequel le deuxième critère prédéfinissable est une fin prévisible ou effective d'une durée de validité de l'information d'authentification du premier abonné.

7. Procédé selon la revendication 1, dans lequel le deuxième critère prédéfinissable est une nouvelle information d'authentification du premier abonné.

8. Procédé selon la revendication 1, dans lequel le deuxième critère prédéfinissable est surveillé à l'aide d'un profil de mouvement du premier abonné.

9. Procédé selon la revendication 1, dans lequel le deuxième critère prédéfinissable est surveillé à l'aide d'une priorisation de premiers abonnés.

10. Procédé selon au moins l'une des revendications précédentes, dans lequel le premier abonné est une MSS (Station d'Abonné Mobile), le premier élément de réseau de communication est une BS (Station de Base) et le deuxième élément de réseau de communication est un ASN-GW (Passerelle réseau de services d'accès) selon la norme WiMax.
